# FASCICULE DE BREVET EUROPEEN

(11) **EP 3 798 084 B1**
(45) Date de publication et mention de la délivrance du brevet: **15.02.2023**
(21) Numéro de dépôt: 20194774.4
(22) Date de dépôt: 07.09.2020
(51) Int. Cl.: B61D 23/02

(54) **ENSEMBLE DE MARCHEPIED POUR VEHICULE DE TRANSPORT, VEHICULE AINSI EQUIPE ET PROCEDE DE MISE EN OEUVRE DE CE VEHICULE**
TRITTSTUFENANORDNUNG FÜR TRANSPORTFAHRZEUG, DAMIT AUSGESTATTETES FAHRZEUG UND EINSATZVERFAHREN DIESES FAHRZEUGS
STEP ASSEMBLY FOR TRANSPORT VEHICLE, VEHICLE EQUIPPED WITH SAME AND METHOD FOR IMPLEMENTING SAID VEHICLE

(30) Priorité: 30.09.2019 EP 19000438; 02.10.2019 FR 1910905
(43) Date de publication de la demande: 31.03.2021
(73) Titulaire: Faiveley Transport Tours, 37701 Saint Pierre des Corps Cedex (FR)
(72) Inventeur: BRION, Florian, 37390 Notre Dame d'Oé (FR); BRUNET, Yann, 37000 Tours (FR); VAUTIER, Fabien, 37270 Véretz (FR); MONTANIE, Thierry, 75016 Paris (FR); GOHARD, Aurélien, 41310 St Amand Longpré (FR); SALUDEN, Yannick, 37400 Amboise (FR); LEFORT, Matthieu, 37420 Beaumont en Véron (FR); KLEIN, Valérie, 37550 Saint Avertin (FR)
(74) Mandataire: Schmidt, Martin Peter

(56) Documents cités:
- EP-A1- 0 217 265
- EP-A1- 2 781 424
- EP-A1- 3 081 450
- EP-A2- 1 034 765
- WO-A1-99/52738
- DE-A1-102007 022 387
- DE-A1-102014 207 349
- US-A- 5 636 399
- US-A1- 2001 038 787

## Description

### Domaine technique de l'invention

La présente invention concerne un ensemble de marchepied, destiné à équiper un véhicule de transport. Elle concerne également un véhicule de transport, qui est équipé d'au moins un tel ensemble de marchepied. Elle concerne enfin un procédé de mise en oeuvre de ce véhicule de transport, faisant en particulier intervenir un déploiement ou un repliement d'une rampe d'accès appartenant à cet ensemble de marchepied. La présente invention trouve son application à des véhicules de transport, notamment de type train, tramway, métro, trolleybus ou encore bus. Elle vise plus spécifiquement, mais non exclusivement, les trains transportant des personnes.

### Etat de la technique

De manière classique certains véhicules de transport sont équipés au moyen d'ensembles de marchepied, visant à faciliter l'accès des voyageurs. En effet les quais destinés à l'arrêt des véhicules puis à la montée et à la descente des voyageurs, ainsi que les planchers des véhicules, se situent souvent à des hauteurs différentes. Ces ensembles de marchepied comprennent en particulier un dispositif d'accès pour les utilisateurs, qui est mobile entre une position repliée et une position déployée.

Il existe tout d'abord des ensembles de marchepied, dans laquelle ce dispositif est constitué d'une plaque mobile en rotation par rapport à la caisse du véhicule, le plus souvent autour de l'axe longitudinal de ce véhicule. Ainsi, dans sa position repliée, cette plaque est relevée de manière sensiblement verticale, au voisinage de la caisse. De tels ensembles de marchepied ne sont cependant pas ceux, qui sont concernés par la présente invention.

En effet l'invention vise plus particulièrement des ensembles de marchepied, dans lesquels le dispositif d'accès est globalement mobile en translation. Ainsi, dans sa position repliée, elle se trouve escamotée en position sensiblement horizontale, au voisinage du plancher fixe appartenant à la caisse du véhicule. Par ailleurs, dans sa position dépliée, son extrémité libre peut prendre généralement appui sur le quai ou rester en porte-à-faux.

On connaît tout d'abord des véhicules de transport, qui sont équipés au moyen d'une plaque coulissante susceptible de se déployer en translation par rapport à la caisse, typiquement selon un mouvement horizontal. Cette plaque permet certes de combler la lacune horizontale, existant entre le quai et la porte. Néanmoins, étant donné que cette plaque se déploie selon un mouvement dont l'inclinaison n'est pas variable, cette solution ne permet pas une adaptation à des quais de hauteurs différentes.

Afin de remédier à cet inconvénient, on a proposé d'équiper les véhicules de transport au moyen d'une rampe inclinable. En pratique, cette rampe se déplace par rapport à la caisse selon un mouvement de translation, dont l'inclinaison finale dépend de la différence de hauteurs entre le quai et le plancher du véhicule. Cette solution permet, du moins en théorie, de résoudre le problème lié à l'utilisation des plaques coulissantes ci-dessus.

Elle implique cependant d'autres inconvénients, en particulier lorsque la différence de hauteurs entre la caisse et le quai est importante. En effet, dans cette configuration, la rampe inclinable présente une pente élevée. Cela n'est pas satisfaisant, notamment en vue d'un accès commode et sécurisé pour des personnes à mobilité réduite (ou PMR). Cette désignation englobe non seulement les personnes en situation de handicap permanent, par exemple en fauteuil roulant ou étant aveugles, mais également les voyageurs ayant une diminution temporaire des capacités de déplacement dans l'espace public, par exemple des voyageurs transportant des bagages volumineux ou encore des femmes enceintes.

Afin de conférer une faible pente à cette rampe inclinable, on peut certes envisager de la réaliser avec une grande longueur. Cette alternative n'est pas non plus satisfaisante, notamment en ce que cette rampe présente alors un encombrement horizontal, sur le quai, générant beaucoup d'interférences avec les voyageurs attendant sur ce quai. Par conséquent sa mise en mouvement, en particulier de manière automatique, est dans ce cas particulièrement contraignante en pratique.

On connaît encore d'autres solutions, dans lesquelles la caisse du véhicule est équipée d'une plate-forme située à proximité des portes et mobile verticalement par rapport au plancher fixe. Une fois que la plate-forme est placée à la même hauteur que le quai, il est alors possible de déployer un dispositif classique (ou marchepied) d'accès pour les passagers. Parmi les brevets antérieurs décrivant une telle plate-forme mobile, on citera notamment EP 2 103 498.

Cette solution alternative présente également certains inconvénients spécifiques, notamment en termes de sécurité. En effet, dans le cas où la plate-forme possède un marchepied dépliable intégré à l'intérieur de la caisse, la lacune horizontale n'est pas comblée avant l'ouverture des portes qui est requise pour pouvoir sortir le marchepied si celui-ci est en retrait du vantail. Même lorsque le marchepied est situé au-dessous du ou des vantaux de porte, cela crée une ouverture béante entre la plateforme abaissée et le(s) vantail (vantaux) de la porte opposée. Dans ces deux cas, ces inconvénients sont à proscrire car ils impliquent des risques de chutes d'objets, voire de passagers sur la voie.

On connaît également, notamment par le brevet européen EP 0 230 888 et le modèle d'utilité allemand DE 2010 4221, une solution supplémentaire faisant appel à une plate-forme montée mobile de façon pivotante par rapport au plancher fixe de la caisse. Une plaque coulissante sur cette plate-forme permet, d'autre part, de combler la lacune horizontale dans DE 2010 4221.

Cette dernière solution ne se révèle pas totalement satisfaisante. En effet, un inconvénient de ce dispositif réside dans la connexion mécanique entre le(les) vantail (vantaux) de porte et la plate-forme inclinée. En effet, cette plate-forme ne peut commencer à être inclinée avant l'ouverture de la porte, puisque cela crée un espace entre la plate-forme et le panneau de porte, lequel est préjudiciable en termes de sécurité. De surcroît, si on incline le dispositif après le déploiement de la plaque coulissante, on peut blesser les pieds des passagers présents sur les quais.

Enfin on citera les documents EP 2 781 424 et EP 1 034 765, qui décrivent chacun un ensemble de marchepied selon le préambule de la revendication 1 annexée.

Compte tenu de ce qui précède, un objectif de la présente invention est de remédier, au moins partiellement, aux inconvénients de l'art antérieur évoqués ci-dessus.

Un autre objectif de l'invention est de proposer un ensemble de marchepied qui permet d'assurer un accès commode et sécurisé aux voyageurs utilisant des quais, destinés à l'arrêt du véhicule, qui présentent des altitudes assez différentes.

Un autre objectif de l'invention est en particulier de proposer un tel ensemble de marchepied, dont la mise en oeuvre ne crée aucune lacune spatiale, susceptible d'engendrer un danger, notamment un risque de chute.

Un autre objectif de l'invention est de proposer un tel ensemble de marchepied, possédant une rampe dépliable qui se prête tout particulièrement à l'accès aux personnes à mobilité réduite, en termes de confort et de sécurité.

### Objets de l'invention

Selon l'invention, au moins un des objectifs ci-dessus est atteint au moyen d'un ensemble de marchepied selon la revendication 1 annexée.

Des caractéristiques avantageuses de cet ensemble de marchepied font l'objet des revendications 2 à 9 annexées.

Un deuxième objet de l'invention est un véhicule de transport selon la revendication 10 annexée.

Une caractéristique avantageuse de ce véhicule de transport fait l'objet de la revendication 11 annexée.

Un troisième objet de l'invention est un procédé de mise en oeuvre de ce véhicule de transport, selon la revendication 12 annexée.

Une caractéristique avantageuse de ce procédé de mise en oeuvre fait l'objet de la revendication 13 annexée.

Un quatrième objet de l'invention est un autre procédé de mise en oeuvre de ce véhicule de transport, selon la revendication 14 annexée.

### Description des figures

L'invention va être décrite ci-après, en référence aux dessins annexés, donnés uniquement à titre d'exemples non limitatifs, dans lesquels :
[Fig. 1] est une vue de dessus, illustrant de manière schématique une partie d'un véhicule de transport équipé de deux ensembles de marchepied conformes à l'invention.
[Fig. 2] est une vue en perspective, illustrant à plus grande échelle un des deux ensembles de marchepied de la figure 1.
[Fig. 3] est une vue en perspective, illustrant de manière séparée une ossature appartenant à l'ensemble de marchepied de la figure 2.
[Fig. 4] est une vue en perspective, illustrant de manière isolée un crochet de verrouillage, appartenant à l'ossature de la figure 3.
[Fig. 5] est une vue en perspective, illustrant sous un autre angle le crochet de la figure 4, dans une position où il permet le verrouillage du plancher mobile et des pièces environnantes par rapport à l'ossature, appartenant à l'ensemble de marchepied selon l'invention.
[Fig. 6] est une vue en perspective illustrant, depuis l'extérieur de l'ossature, le crochet des figures 4 et 5, ainsi qu'un actionneur de ce crochet.
[Fig. 7] est une vue en perspective, illustrant de manière séparée un dispositif intermédiaire appartenant à l'ensemble de marchepied des figures précédentes.
[Fig. 8] est une vue en perspective illustrant, à plus grande échelle, l'extrémité d'un arbre de transmission appartenant au dispositif intermédiaire de la figure 7, ainsi qu'un levier coopérant avec cet arbre.
[Fig. 9] est une vue en perspective illustrant, de manière isolée, une glissière ménagée dans un flanc du dispositif intermédiaire des figures 7 et 8.
[Fig. 10] est une vue en perspective, illustrant de manière séparée un système coulissant appartenant à l'ensemble de marchepied des figures précédentes.
[Fig. 11] est une vue en perspective, illustrant un cadre appartenant au système coulissant de la figure 10.
[Fig. 12] est une vue en perspective illustrant, sous un angle différent de celui des figures 10 et 11, le cadre de la figure 11 monté sur le dispositif intermédiaire de la figure 7.
[Fig. 13] est une vue en perspective illustrant, de manière isolée, une glissière ménagée dans le cadre des figures 11 et 12.
[Fig. 14] est une vue en perspective, illustrant de manière séparée une succession de lames appartenant au système coulissant de la figure 10.
[Fig. 15] est une vue en coupe, prise selon l'axe principal d'un arbre appartenant au dispositif intermédiaire, illustrant en particulier les glissières équipant ce dispositif intermédiaire et le système coulissant, appartenant à l'ensemble de marchepied conforme à l'invention.
[Fig. 16] est une vue en perspective, illustrant de manière séparée un plancher pivotant appartenant à l'ensemble de marchepied conformes à l'invention.
[Fig. 17] est une vue en perspective, illustrant de manière isolée un patin d'appui, appartenant au plancher pivotant de la figure 16.
[Fig. 18] est une vue en coupe longitudinale, illustrant l'ensemble de marchepied conforme à l'invention dans la position repliée de son système coulissant, avec toutes les parties inclinables positionnées de manière horizontale.
[Fig. 19] est une vue en coupe longitudinale, illustrant l'ensemble de marchepied conforme à l'invention dans la position dépliée de son système coulissant, avec toutes les parties inclinables positionnées de manière inclinée par rapport à l'horizontale.
[Fig. 20] est une vue de côté, illustrant un véhicule de transport équipé avec un ensemble de marchepied selon l'invention, en regard d'un quai dont l'altitude est inférieure à celle du plancher fixe de ce véhicule.
[Fig. 21] est une vue de côté, analogue à la figure 20, illustrant une première étape de la mise en oeuvre de ce véhicule.
[Fig. 22] est une vue de côté, analogue aux figures 20 et 21, illustrant une seconde étape de cette mise en oeuvre.
[Fig. 23] est une vue de côté, analogue aux figures 20 à 22, illustrant une troisième étape de cette mise en oeuvre.
[Fig. 24] est une vue en perspective, illustrant le positionnement des lames du système coulissant, le long des glissières appartenant au dispositif intermédiaire et au système coulissant.
[Fig. 25] est une vue de dessus, illustrant le mouvement des lames de la figure 24 lors de leur passage depuis la glissière inférieure vers la glissière supérieure.
[Fig. 26] est une vue en perspective, illustrant le positionnement des lames dans la glissière supérieure.
[Fig. 27] est une vue en perspective, illustrant sous un autre angle la plus grande échelle, le positionnement des lames le long de cette glissière.
[Fig. 28] est une vue en perspective, illustrant le déplacement de tringles et de bielles appartenant au dispositif intermédiaire.
[Fig. 29] est une vue en perspective, illustrant le système coulissant dans sa position déployée par rapport au dispositif intermédiaire.
[Fig. 30] est une vue schématique, récapitulant les différentes étapes mises en oeuvre lors du déploiement du système coulissant, lorsque le quai en regard est situé à une altitude inférieure à celle du plancher fixe du véhicule.
[Fig. 31] est une vue schématique, récapitulant les différentes étapes mises en oeuvre lors du repliement du système coulissant de la figure 30.
[Fig. 32] est une vue de dessus, analogue à la figure 25, montrant le déplacement des lames lors de cette phase de repliement.
[Fig. 33] est une vue schématique, récapitulant les différentes étapes mises en oeuvre lors du déploiement du système coulissant, lorsque le quai en regard est situé à une altitude supérieure à celle du plancher fixe du véhicule.
[Fig. 34] est une vue schématique, récapitulant les différentes étapes mises en oeuvre lors du repliement du système coulissant de la figure 33.

### Description détaillée

Les références numériques suivantes sont utilisées dans la présente description.

I et l' ensembles de marchepied
- XX :: axe de roulage
- 100 :: véhicule de transport
- 102 :: caisse du véhicule
- 104 :: plancher fixe de la caisse
- 106 et 108 :: portes
- 110 :: renfoncement
- 1 :: ossature
- 10 :: fond de 1
- 11 :: axe physique de pivotement
- 12 :: aile intérieure
- 14 :: oeillets
- 16 et 18 :: flancs
- 20 :: ouverture latérale
- 22 et 24 :: logements
- 26 et 28 :: rives
- 17 :: crochet de verrouillage
- 19 :: extrémité de verrouillage
- 21 :: échancrure dans le flanc 16
- 23 :: actionneur de 17
- 3 :: dispositif intermédiaire pivotant
- 30 :: fond
- 31 :: aile
- 32 :: oeillets
- 33 et 34 :: flancs
- 35 :: ergot
- 36 :: glissière basse
- 37 :: surfaces de came
- 38 :: transitions vers le haut
- 39 :: rainures
- 4 :: moteur
- 40 :: arbre de sortie
- 41 et 42 :: pignons
- 43 et 44 :: chaînes
- 45 et 46: pignons supplémentaires
- 47 et 48 :: brides
- 49 :: couronne d'entraînement
- 5 :: arbre principal
- A5 :: axe principal de l'arbre 5
- 50 :: paliers
- 51 :: couronnes de transmission
- 52 :: chaîne
- 53 et 54 :: pignons fous
- 55 :: portions cannelées
- 56 :: fût
- 57 :: leviers
- 58 :: galets
- 60 :: tringle
- 61 :: disque intercalaire
- 62 et 63 :: bielles
- 7 :: système coulissant
- 7' :: bord libre de 7
- 70 :: cadre
- 71 et 72 :: longerons
- 73 et 74 :: traverses
- 75 :: connecteurs mécaniques
- 77 :: galets des traverses 73 74
- 78 :: glissière haute
- 8A :: lame initiale
- 8B à 8F :: lames principales
- 8G :: lame intermédiaire
- 8H :: lame finale
- 80:: rehausse
- 81 :: profil de jonction
- 82 :: flanc de chaque lame
- 83 :: tiges
- 84 :: logements débouchants des lames
- 85:: chariots
- 86 :: galets de support
- 87 :: galets de guidage
- 88 :: ressort de compression
- 9 :: plancher pivotant
- 90 :: surface de cheminement
- 91 :: structures de renfort
- 92 :: extrémité amincie
- 90' :: bord libre de 90
- 93 :: décrochement
- 94 :: oeillets
- A1 :: axe caractéristique de pivotement
- 95 et 96 :: flancs
- 97 :: patins d'appui
- 98 :: pions de crochetage
- 99 :: rampe d'accès
- 200 :: quai

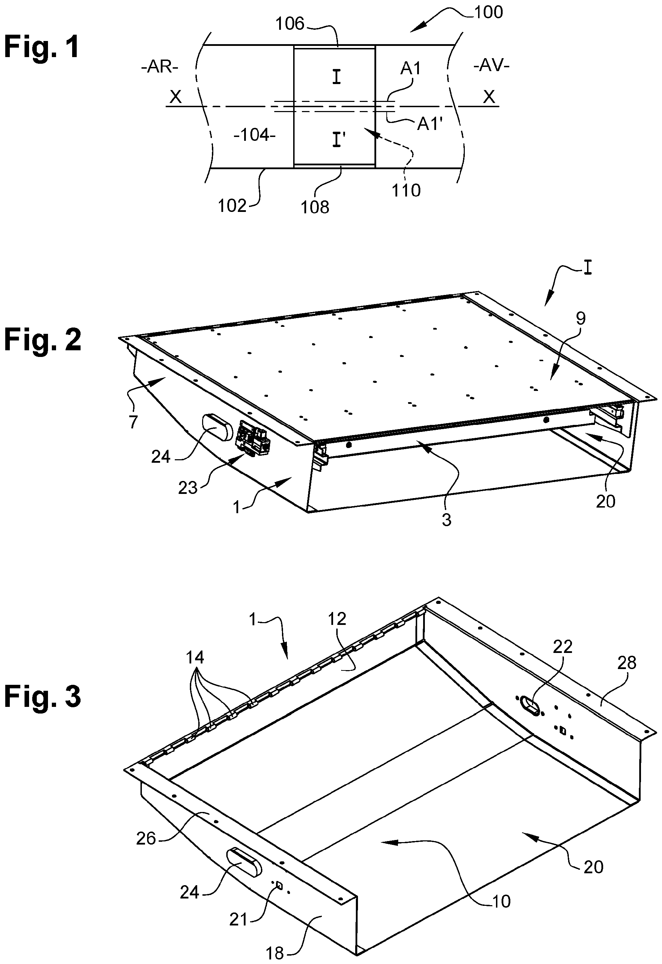

La figure 1 illustre, de manière schématique, un tronçon de véhicule de transport 100 qui est équipé de deux ensembles de marchepied conformes à l'invention, désignés respectivement par les références I et l'. Ce véhicule est par exemple un train, un tramway, un métro, un bus ou encore trolleybus. On note XX l'axe longitudinal, ou axe de roulage de ce véhicule 100. On note également AV et AR l'avant et l'arrière de ce véhicule, en référence au sens de roulage. Dans ce qui suit les orientations géométriques des éléments mécaniques, constitutifs des ensembles de marchepied selon l'invention, font référence à cet axe XX.

Sur cette figure 1 on a représenté uniquement de façon simplifiée un tronçon de la caisse 102 de ce véhicule, le plancher fixe 104 de cette caisse, ainsi que deux portes 106 et 108 prévues en regard d'un ensemble de marchepied correspondant I et l'. Le plancher fixe 104 est creusé d'un renfoncement transversal 110, dans lequel sont implantés les ensembles I et l'. Dans le présent mode de réalisation, ces ensembles I et l' sont disposés de manière globalement symétrique, par rapport à l'axe de roulage XX. De plus leurs axes de pivotement caractéristiques A1 et A1', qui seront décrits plus en détail dans ce qui suit, sont placés à proximité immédiate, de part et d'autre de l'axe XX.

À titre de variante non représentée, on peut prévoir que ce véhicule est équipé d'un unique ensemble de marchepied conforme à l'invention. Dans ce cas, il est avantageux que cet ensemble ne s'étende pas sur la totalité de la direction transversale, ou largeur, du véhicule. De façon typique, cet ensemble de marchepied unique s'étend sur sensiblement la moitié de cette largeur.

On va maintenant décrire, en référence aux figures 2 à 17, la structure de l'ensemble de marchepied I, étant en 10 tendu que la structure de l'autre ensemble l' est analogue. Cet ensemble de marchepied I comprend essentiellement une ossature 1 destinée à être fixée sur la caisse 102, un dispositif intermédiaire 3, un système coulissant 7 susceptible de coulisser par rapport au dispositif intermédiaire 3, ainsi qu'un plancher pivotant 9 destiné au passage des voyageurs. Comme on va l'expliquer en grand détail, à la fois le dispositif intermédiaire et le plancher mobile sont aptes à pivoter par rapport à l'ossature 1, de manière indépendante l'un de l'autre, autour de l'axe caractéristique précité A1.

Comme le montre la figure 3, l'ossature 1 comprend tout d'abord un fond 10 s'étendant transversalement, depuis l'axe de roulage jusqu'au voisinage de la porte 106. Ce fond est globalement incliné vers le bas, depuis cet axe de roulage jusqu'à cette porte. Du côté intérieur, c'est-à-dire au voisinage de l'axe XX, le fond 10 est bordé par une aile intérieure 12. Dans sa partie supérieure cette aile est munie d'une pluralité d'oeillets 14, faisant saillie transversalement vers l'extérieur. Ces oeillets sont mutuellement espacés, selon l'axe de roulage, de manière à coopérer avec d'autres oeillets équipant respectivement la structure intermédiaire et le plancher pivotant.

Par ailleurs, deux flancs respectivement avant 16 et arrière 18 s'étendent à partir du fond 10. Enfin, du côté extérieur c'est-à-dire au voisinage de la porte 106, l'ossature 1 délimite une ouverture latérale 20, permettant le passage d'une rampe, formée par le système coulissant à l'état déplié ainsi que par le plancher pivotant, comme on le verra dans ce qui suit. Chaque flanc est équipé d'un logement respectif 22 et 24, de forme oblongue, faisant saillie vers l'extérieur. Chaque logement, dont le fond est fermé, est destiné à coopérer avec un levier de transmission décrit ci-après. Enfin, chacun de ces flancs est prolongé par une rive respective 26 et 28. Chaque rive assure la fixation de l'ossature, sur la caisse du véhicule. Cette fixation est assurée par tous moyens appropriés, de type connu en soi. On préférera une fixation amovible, notamment par vissage.

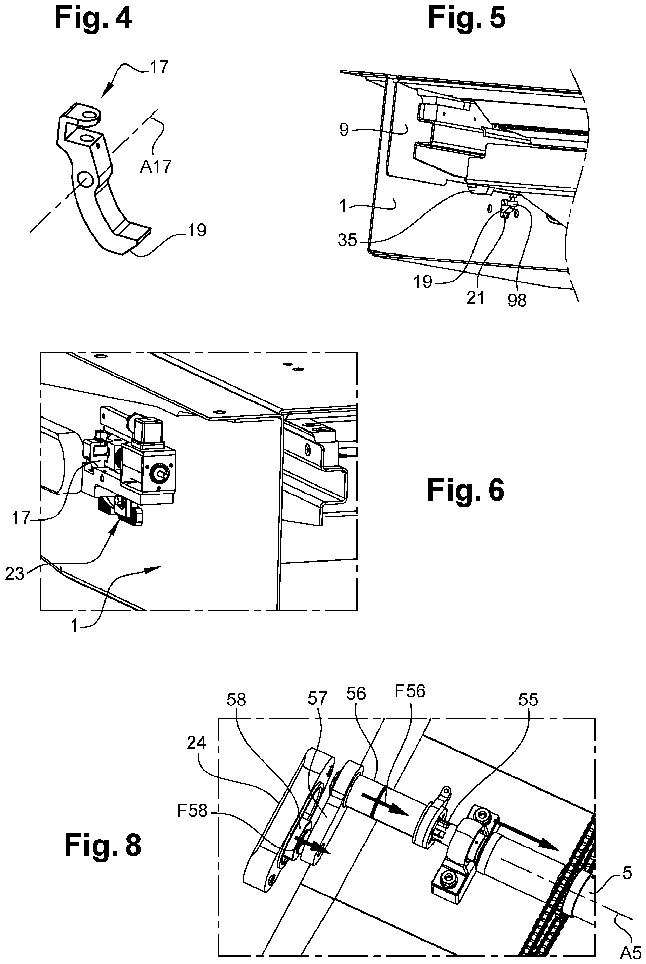

Chaque flanc 16 et 18 est équipé d'un crochet de verrouillage, dont seul l'un 17 est visible sur les figures 4 à 6. Ce crochet est monté pivotant autour d'un axe A17, parallèle à la direction principale du flanc sur lequel il est installé. Il possède en particulier une extrémité de crochetage 19, apte à pénétrer dans une échancrure 21 ménagée dans le flanc 16. Ce crochet est susceptible d'être mis en mouvement par un actionneur 23, de tout type approprié, notamment électromagnétique.

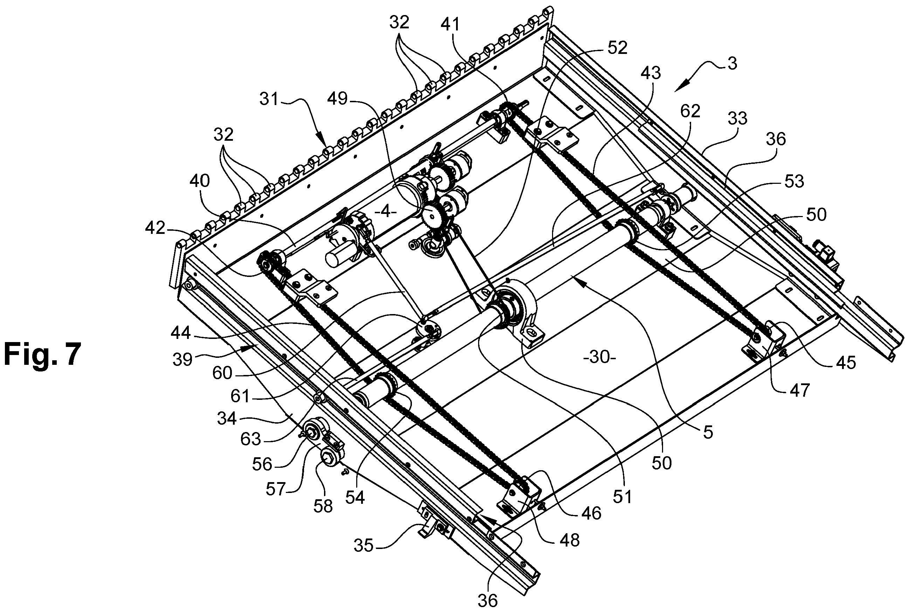

En référence notamment à la figure 7, le dispositif intermédiaire 3 comprend tout d'abord un fond 30 s'étendant transversalement, de façon globalement parallèle au fond 10 ci-dessus. Ce fond 30 est incliné, depuis chacune de ses extrémités latérales, en direction de sa partie médiane située à une attitude plus basse. Du côté intérieur, ce fond 30 est bordé par une aile 31, laquelle est munie d'une pluralité d'oeillets 32. Ces derniers font saillie vers le haut, de manière à être interposées entre des oeillets adjacents 14 tout en ménageant des passages de réception pour des oeillets du plancher pivotant, décrits ci-après.

Enfin, deux flancs respectivement avant 33 et arrière 34 s'étendent à partir du fond 30. Ces flancs 33 et 34 sont situés en regard de la face intérieure d'un flanc correspondant 16 et 18, appartenant à l'ossature 1. Comme le montre la figure 5, chaque flanc est équipé d'un ergot de solidarisation, dont seul l'un 35 est illustré. Comme cela ressortira clairement dans ce qui suit, cet ergot permet de solidariser mutuellement le dispositif intermédiaire 3 et le plancher pivotant 9, selon un unique sens.

Le dispositif intermédiaire 3 est en outre équipé d'un moteur, désigné dans son ensemble par la référence 4. Ce moteur, qui est prévu du côté intérieur, à savoir au voisinage de l'aile 31, est fixé sur le fond 30 par tous moyens appropriés. Ce moteur est de type classique, notamment électrique rotatif, de sorte qu'il ne sera pas décrit plus en détail dans ce qui suit.

Un arbre 40 est entraîné en rotation par le moteur 4 ci-dessus autour d'un axe longitudinal, à savoir sensiblement parallèle à celui XX. Les extrémités de cet arbre reçoivent des pignons 41 et 42, qui permettent l'entraînement de chaînes respectives 43 et 44. À leurs extrémités opposées à l'arbre 40, ces chaînes coopèrent avec des pignons supplémentaires 45 et 46, eux-mêmes montés en pivot sur des brides respectives 47 et 48.

Le dispositif intermédiaire 3 comprend en outre un arbre principal 5, dit de transmission, qui s'étend longitudinalement, en étant fixé sur la partie médiane du fond 30. Cet arbre, qui est monté sur des paliers 50, est équipé d'une couronne de transmission 51. Cette dernière est mise en mouvement, via une chaîne dentée ou analogue 52, par une couronne d'entraînement 49, coopérant directement avec le moteur 4. Par ailleurs, des pignons 53 et 54 sont montés fous autour de l'arbre 5. En service, lorsque les chaînes 43 et 44 sont mises en mouvement, elles font pivoter ces pignons 53 et 54 sans cependant entraîner de manière intempestive l'arbre 5, ni l'endommager.

Chaque extrémité de l'arbre 5 possède une portion cannelée, dont l'une 55 est visible sur la figure 8. Cette portion 55 coopère avec un fût respectif 56, lequel est également montré sur cette figure 8. Cette portion 55 et ce fût 56 sont liés en rotation autour de l'axe principal A5 de l'arbre 5, mais possèdent cependant un degré de liberté en translation mutuelle selon cet axe principal A5. Ce fût 56 pénètre dans une ouverture ménagée dans un flanc respectif 33, 34, puis se prolonge par un levier 57 lui-même terminé par un galet 58. Comme on le verra dans ce qui suit, ce galet permet le pivotement sélectif par rapport à l'ossature 1, soit du dispositif intermédiaire 3, soit du plancher pivotant 9.

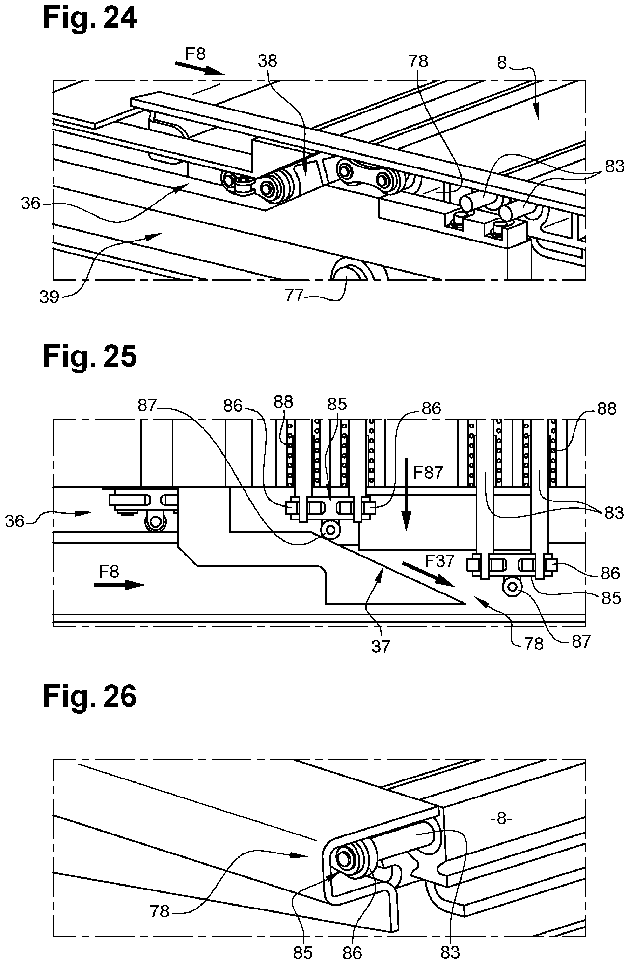

Le moteur 4 est en outre apte à entraîner une tringle 60, par exemple grâce à son stator sur pivot. Cette tringle permet le pivotement d'un disque de renvoi 61, qui entraîne à son tour la mise en translation de bielles 62 et 63 qui s'étendent globalement selon l'axe principal de l'arbre 5, selon des sens opposés. À leur extrémité opposée au disque 61, chaque bielle se trouve solidarisée sur un fût respectif, tel celui 56 des figures 8 et 26. Par conséquent, la mobilisation de la tringle permet, via le disque et les bielles, la mise en translation de chaque fût par rapport à l'arbre 5.

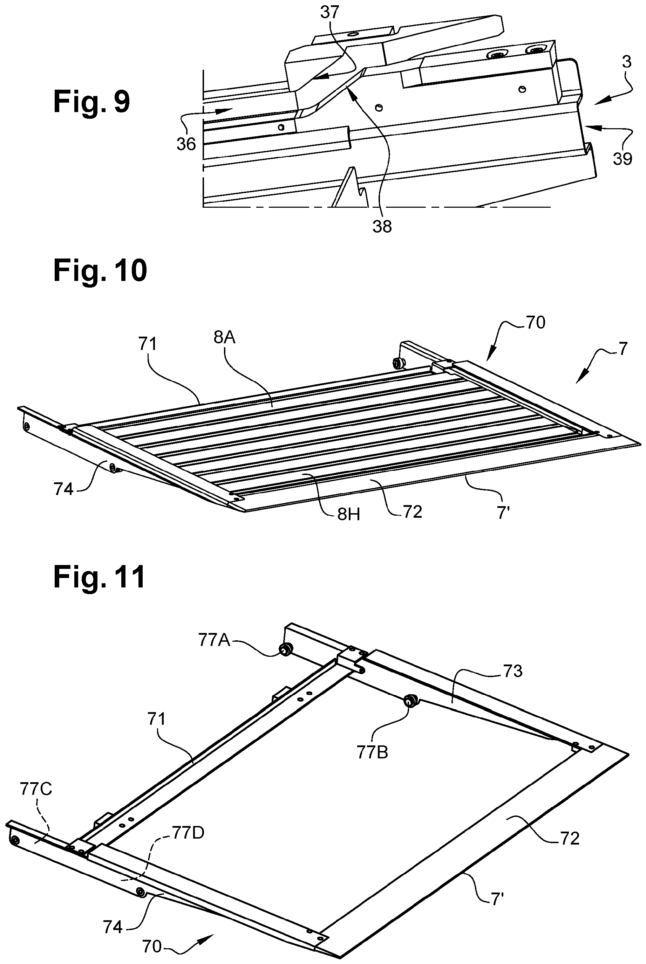

À son extrémité latérale extérieure, voisine de la porte 106, chaque flanc 33 et 34 est muni d'une glissière respective, dont une seule 36 est illustrée sur la figure 7. Comme le montre à plus grande échelle la figure 9, les parois de la glissière 36 sont prolongées, vers l'extérieur et vers l'avant, par une surface de came 37. Par ailleurs, ces parois sont également prolongées par une transition 38, inclinée vers le haut en direction de l'extérieur.

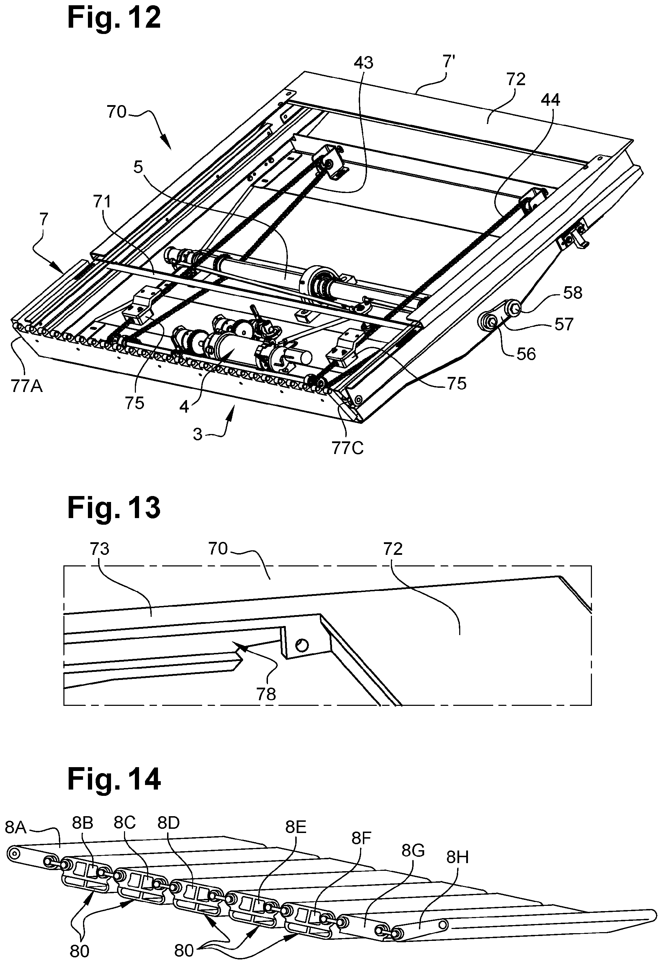

Comme montré sur les figures 10 et 11 le système coulissant 7 comprend tout d'abord un cadre 70, formé par des longerons respectivement intérieur 71 et extérieur 72, ainsi que des traverses respectivement avant 73 et arrière 74. Comme le montre la figure 12, le longeron intérieur 71 est muni de deux connecteurs mécaniques 75, qui sont chacun fixés sur une chaîne respective 43 44. La fixation de chaque connecteur sur chaque chaîne est réalisée de manière connue en soi, notamment en pinçant au moins un maillon de chaque chaîne grâce à des pièces appartenant un connecteur respectif.

Du côté latéral intérieur, adjacent à l'axe de roulage XX, chaque traverse 73 74 est équipée d'un galet respectif 77A à 77D. Chaque galet assure la translation du système coulissant 7 par rapport au dispositif intermédiaire 3, en roulant dans une rainure, dont une seule 39 est illustrée sur la figure 7, laquelle est ménagée dans un flanc respectif de ce dispositif 3. Sur la figure 9, cette rainure 39 est représentée à plus grande échelle.

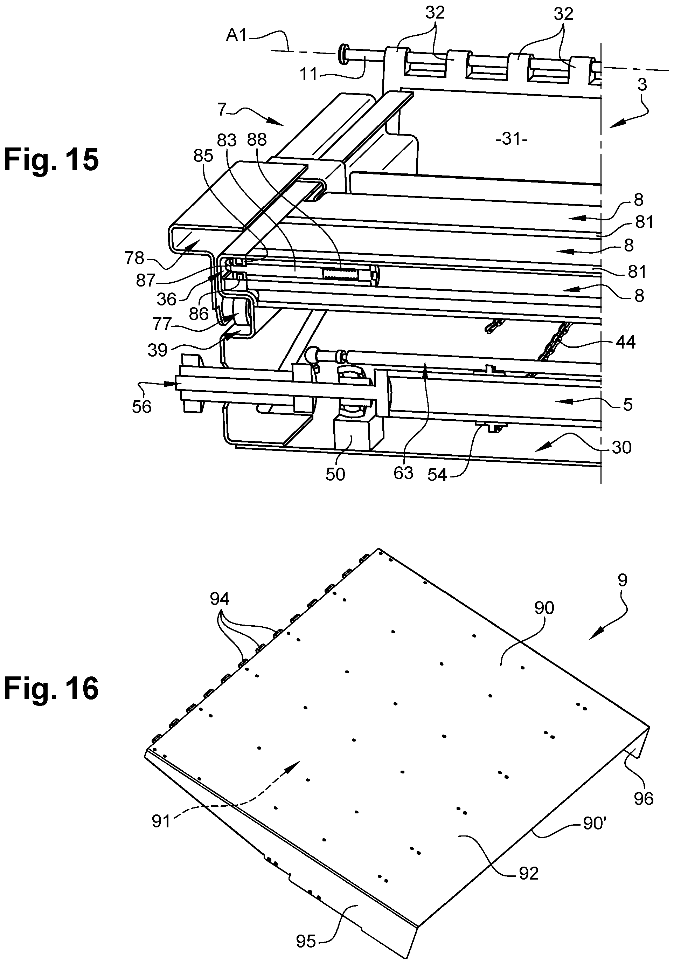

Du côté latéral extérieur, chaque traverse est équipée d'une glissière 78, visible sur la figure 13. Lorsque le système coulissant 7 est monté sur le dispositif intermédiaire 3, comme cela est notamment visible sur la figure 12, chaque glissière 78 se situe à une altitude supérieure à celle de chaque glissière 36, comme le montre notamment la figure 15. Par ailleurs, chaque glissière 78 est décalée vers l'extérieur vis-à-vis d'une glissière respective 36. Cela permet d'éviter à ces glissières 36 et 78 de se chevaucher et, de ce fait, d'éviter toute interférence.

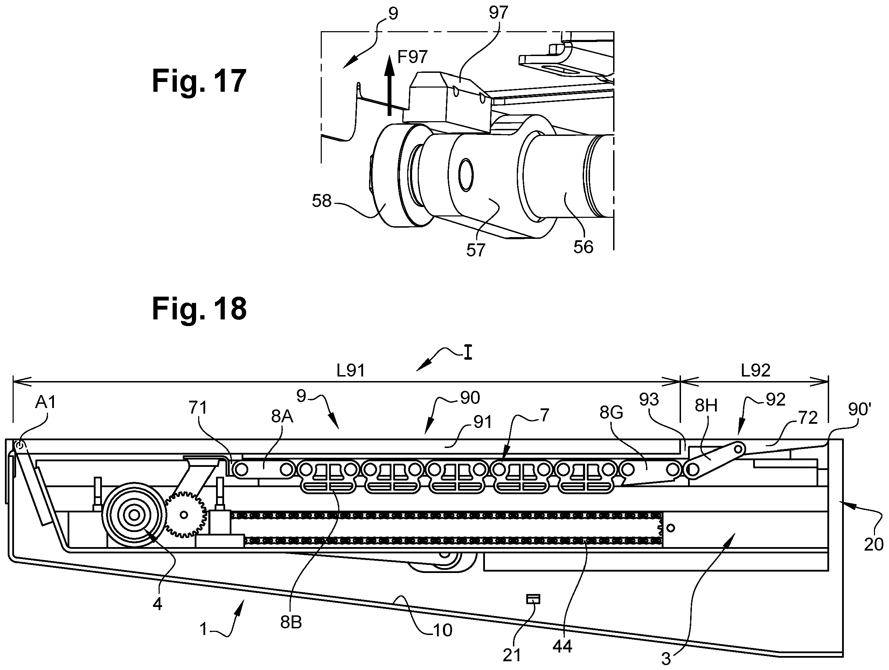

En référence notamment à la figure 14 le système coulissant 7 comprend, outre le cadre 70 ci-dessus, une pluralité de lames articulées deux à deux autour d'un axe, qui est parallèle à chacun des axes longitudinaux de ces lames. À partir de l'extrémité latérale intérieure on retrouve successivement une lame dite initiale 8A, plusieurs lames dites principales 8B à 8F, prévues au nombre de cinq dans l'exemple illustré, une lame intermédiaire 8G ainsi qu'une lame finale 8H. Comme le montre notamment la figure 18, la lame initiale 8A est placée au voisinage du longeron intérieur 71, alors que la lame finale est placée au voisinage du longeron extérieur 72.

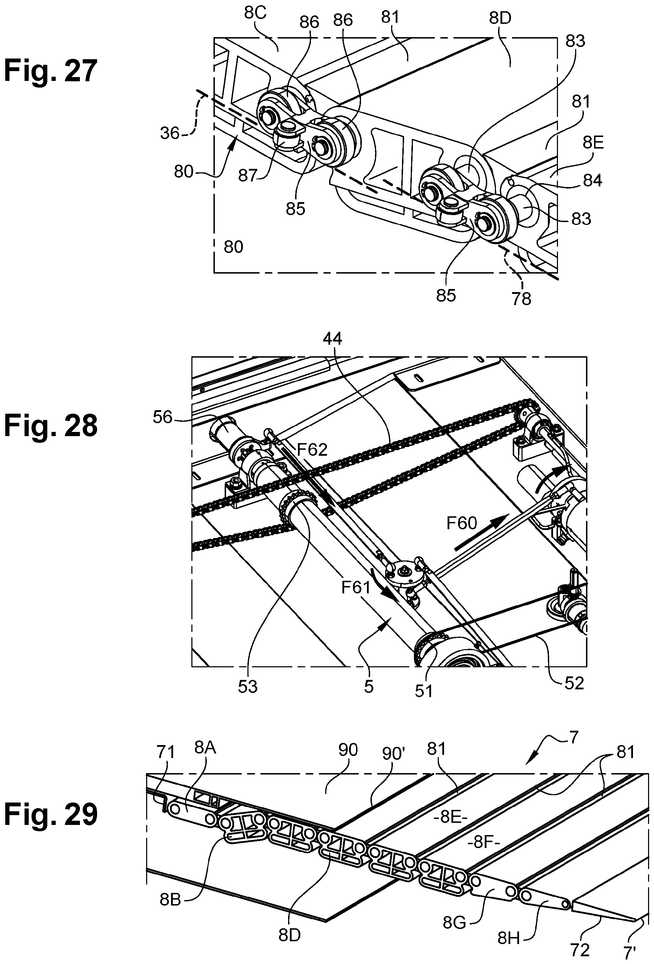

Les lames principales sont équipées d'une rehausse 80, visible notamment sur les figures 14 et 27, de sorte qu'elles possèdent une hauteur supérieure à celle des autres lames. De plus chaque couple de lames adjacentes est relié au moyen d'un profil de jonction 81, réalisé typiquement en une matière plastique ou bien un élastomère. Ce profil de jonction possède deux surfaces latérales opposées de forme semi-circulaire convexe, dont chacune coopère avec le flanc respectif en regard 82 d'une larme, de forme semi-circulaire concave.

Par ailleurs, comme le montre également la figure 27, chaque couple de lames adjacentes est articulé au moyen de tiges 83. De façon plus précise, chacune de ces tiges est reçue dans un logement débouchant 84, formé à l'extrémité de chaque lame. Ces tiges sont mobiles en rotation autour de leur axe principal par rapport aux lames, en étant également mobiles en translation par rapport à ces lames, selon cet axe.

L'extrémité de chaque tige, opposée au logement 84, pénètre dans la chape respective d'un chariot 85. Chaque tige est mobile en rotation autour de son axe par rapport à ce chariot, tout en étant solidarisé à ce dernier en translation. Ce chariot possède deux galets de support 86, qui sont aptes à pivoter autour de l'axe principal d'une tige respective, ainsi qu'un galet de guidage 87 qui est apte à pivoter autour d'un axe vertical. Enfin des ressorts 88 de compression, qui sont illustrés de manière schématique, tendent à repousser chaque tige à l'opposé de chaque extrémité de lame.

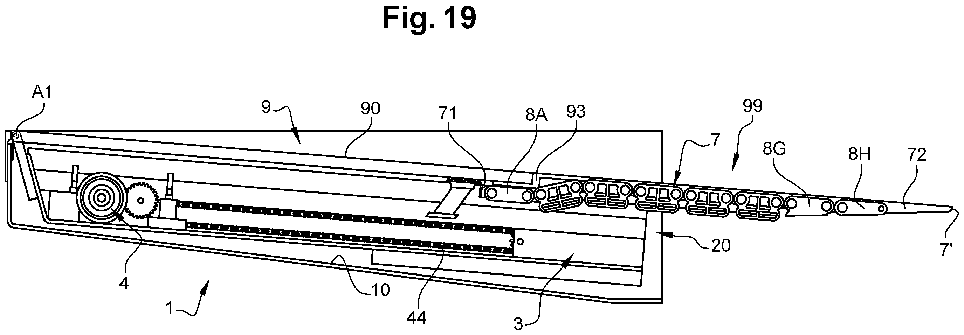

Comme cela est visible notamment sur la figure 16 le plancher pivotant 9 comporte tout d'abord une plaque 90, formant plancher mobile de cheminement, qui s'étend transversalement depuis l'axe de rotation jusqu'au voisinage de la porte. Sur sa face inférieure, comme cela est montré notamment sur la figure 19, ce plancher 90 est rigidifié par un renfort 91. Ce renfort s'étend à partir de l'extrémité latérale interne de ce plancher, seulement sur une partie transversale de ce dernier. En effet, ce plancher présente une tôle 92, formant une extrémité amincie dépourvue de renfort.

Le renfort 91 et l'extrémité amincie 92 délimitent un décrochement 93, au niveau duquel les lames 8 du système coulissant basculent en service, comme cela apparaîtra dans ce qui suit. Cette tôle d'extrémité 92 possède une épaisseur bien inférieure à celle du renfort, en étant typiquement voisine de 6 mm. Par ailleurs, le renfort 91 possède une dimension L91, qui est bien supérieure à la dimension L92 de l'extrémité amincie 92.

Du côté intérieur, le plancher 90 est prolongé par une pluralité d'oeillets 94, faisant saillie transversalement vers l'intérieur. Ces oeillets sont mutuellement espacés, selon l'axe de roulage, de manière à coopérer avec les oeillets ci-dessus 14 et 32. Un axe physique de pivotement, qui est plus particulièrement visible sur la figure 15 en étant affecté de la référence 11, s'étend à l'intérieur des orifices, ménagés dans l'ensemble de ces oeillets 14, 32 et 94.

Cet axe physique 11 définit l'axe géométrique de pivotement A1, qui est caractéristique de l'ensemble I selon l'invention. De manière avantageuse, cet axe caractéristique A1 s'étend sensiblement à la même altitude que le plancher fixe du train, de manière à assurer une continuité de surfaces sans ressaut entre ce plancher fixe et le plancher mobile 90. Enfin deux flancs respectivement avant 95 et arrière 96 prolongent le plancher 90 vers le bas, en étant parallèles aux flancs 16 et 18, ainsi que 33 et 34, décrits ci-dessus.

Chacun des flancs 95 et 96 est muni d'un patin d'appui, dont seul l'un 97 est illustré sur la figure 17. Chaque patin est prévu en regard du logement 22, ménagé dans le flanc adjacent du dispositif intermédiaire 3. Par conséquent, comme on le verra dans ce qui suit, chacun de ces patins est susceptible de coopérer avec un levier respectif 57, porté par l'arbre de transmission 5. Chaque flanc est en outre muni d'un pion de crochetage, dont seul l'un 98 est illustré sur la figure 5. Chacun de ces pions est apte à coopérer avec l'extrémité libre de crochetage, appartenant au crochet 17 décrit ci-dessus.

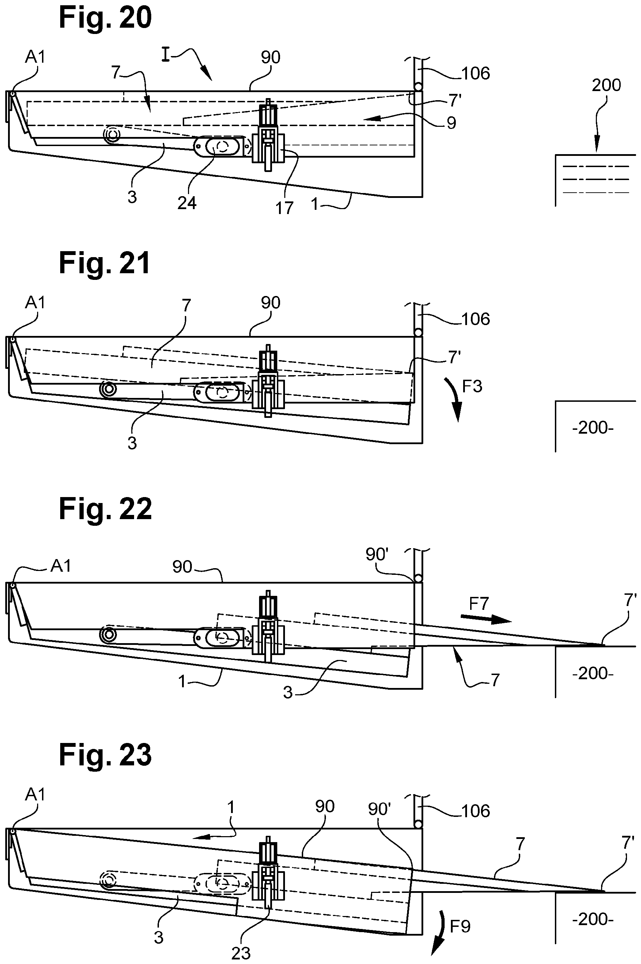

La mise en oeuvre du véhicule de transport 100, équipé des ensembles de marchepied I et l' décrits ci-dessus, va maintenant être explicitée. Sur les figures 18 et 20, l'ensemble de marchepied I est dans sa position dite de repos, correspondant à un roulage normal du véhicule de transport. Dans cette position la surface de cheminement 90 du plancher pivotant 9 affleure le plancher fixe 104 de la caisse, ce dernier n'étant pas représenté sur cette figure 17.

Par ailleurs, à l'exception de la lame finale 8H, les différentes lames 8A à 8G du système coulissant 7 sont reçues dans la glissière 36 du dispositif intermédiaire. Ainsi ces lames 8A à 8G s'étendent au-dessous du renfort 91, prévu sur la face inférieure du plancher mobile. Les galets de guidage 87, appartenant à ces lames, prennent appui contre la paroi latérale en regard d'une glissière respective 36. La lame finale précitée 8H est pour sa part reçue dans la transition 38, prolongeant la glissière 36, à savoir que cette lame est positionnée de façon inclinée vers le haut, en direction du longeron extérieur 72.

On suppose en outre que le véhicule de transport 100 est immobilisé en regard d'un quai, illustré de façon schématique sur la figure 20 en étant désigné dans son ensemble par la référence 200. Selon une première possibilité de la mise en oeuvre de l'invention, représentée sur cette figure, la surface du quai est située au-dessous de la surface supérieure du plancher mobile 90. Un capteur non représenté mesure alors, de façon connue en soi, les distances respectivement horizontale et verticale séparant le bord libre 7' du système coulissant, par rapport à l'extrémité en regard du quai. Un calculateur également non représenté détermine, à partir de cette mesure, l'inclinaison voulue du système coulissant, pour qu'il vienne en appui sur le quai au terme d'un mouvement de déploiement. On peut également prévoir que, au terme de ce mouvement de déploiement, le système coulissant vienne, non pas en appui sur le quai, mais en regard de ce quai et au-dessus de ce dernier.

Afin d'incliner le système coulissant selon cette valeur souhaitée, on suppose tout d'abord que chaque galet 58, prévu à l'extrémité d'un levier respectif 57, se trouve en prise avec un logement respectif 22 et 24 de l'ossature. Il s'agit ensuite de mettre en marche le moteur 4, de sorte que la couronne 49 entraîne la chaîne 51 et, par conséquent, l'arbre principal 5. De ce fait, chaque galet prend appui sur des parois d'un logement respectif. Grâce au bras de levier que procurent les leviers 57, cet appui du galet entraîne le pivotement du dispositif intermédiaire 3 par rapport à l'ossature 1 autour de l'axe caractéristique A1, selon la flèche F3 sur la figure 21.

On notera que, pendant le pivotement du dispositif intermédiaire par rapport à l'ossature, le crochet 17 est maintenu dans sa position active. En d'autres termes, son extrémité 19 permet de soutenir le plancher pivotant 9, via le pion 98, comme cela est montré notamment sur la figure 5. Par conséquent, ce plancher pivotant 9 est fermement maintenu en position par rapport à l'ossature 1, même s'il ne prend plus appui sur le dispositif intermédiaire 3. En outre l'ergot 35, porté par ce dispositif intermédiaire 3, est inactif vis-à-vis du plancher pivotant. En d'autres termes, lorsque ce dispositif 3 pivote vers le bas, cela n'entraîne pas de pivotement de l'organe 9.

Lorsqu'on atteint l'inclinaison voulue, par rapport à l'ossature 1, à la fois du dispositif intermédiaire 3 et du système coulissant 7, on arrête la rotation de l'arbre principal de transmission 5. Puis on actionne les chaînes dentées 43 et 44, de manière à déplacer en translation le système coulissant 7 par rapport au dispositif intermédiaire 3. Cette mise en translation, qui est montrée sur la figure 22 par la flèche F7, permet au bord libre 7' du système coulissant de prendre appui contre la surface supérieure du quai 200, comme cela est illustré sur cette même figure. À titre de variante non représentée, comme explicité ci-dessus, au terme de cette mise en translation, le bord libre du système coulissant peut se trouver en regard du quai, au-dessus de la surface supérieure de ce dernier.

Comme on l'a vu ci-dessus, le moteur unique 4 assure plusieurs fonctions. Il s'agit tout d'abord de l'entraînement de l'arbre 5, via la couronne 49 et la chaîne 51. Une fonction supplémentaire réside dans l'entraînement du système coulissant 7, via les chaînes 43 et 44. Enfin le moteur permet l'entraînement des leviers 57, via la tringle 60 ainsi que les bielles 62 et 63. À cet égard, on notera que cette caractéristique est avantageuse, notamment en termes de simplicité, dans la mesure où un ensemble moteur unique permet de réaliser ces différentes fonctions.

La distribution de la puissance générée par ce moteur, pour les fonctions ci-dessus, est avantageusement gérée par des électrofreins ou analogues, qui sont montés sur différents arbres situés à l'aval du moteur. On notera également que la stabilité du système coulissant est obtenue, avantageusement par le fait que ce dernier est déplacé au moyen d'un engrenage irréversible. Par ailleurs, la stabilité de l'inclinaison à la fois du plancher pivotant et du dispositif intermédiaire est garantie grâce également à l'utilisation d'un engrenage irréversible.

Les figures 24 à 27 illustrent par ailleurs le basculement des lames 8, lors du déplacement en translation du système coulissant par rapport au dispositif intermédiaire. Comme on l'a vu ci-dessus, lorsque le système coulissant est replié, l'intégralité des lames à l'exception de la lame finale sont situées au-dessous du renfort 61. Au fur et à mesure du déplacement du système coulissant 7 par rapport au dispositif intermédiaire 3, les différentes lames se déplacent également par rapport à ce dernier selon la flèche F8 sur les figures 24 et 25.

Par conséquent, ces lames atteignent tout d'abord l'extrémité extérieure de la glissière inférieure 36, à savoir son extrémité opposée à l'axe A1. Ces lames progressent ensuite à la fois le long de la transition 38 et de la came 37, selon la flèche F37, jusqu'à atteindre la glissière supérieure 78. Étant donné que cette dernière est située à l'extérieur de la glissière 36, les tiges 83 sont repoussées par l'effet des ressorts 88 à l'opposé des lames qu'ils reçoivent (voir flèche F87 sur la figure 24).

Chaque galet de guidage 87 prend alors appui contre la surface latérale en regard d'une glissière respective 78, comme cela est montré sur les figures 25 et 26. La figure 27 illustre plus clairement la position des lames et des chariots qui leur sont associés, à la fois au sein de la glissière 36 et de la glissière 78. Sur cette figure 27, dans un but de clarté, ces glissières ne sont pas représentées, leur surface inférieure étant matérialisée par des lignes pointillées.

Une fois que le système coulissant a été placé dans sa position souhaitée au contact du quai, on fait pivoter le plancher pivotant 9 par rapport à l'ossature. À cet effet, on déverrouille tout d'abord le crochet 17, au moyen de l'actionneur 23. On déplace ensuite la tringle 60 puis, via le disque de renvoi 61, les bielles 62 et 63, selon les flèches F60, F61, F62 sur la figure 26. Cela provoque un mouvement de translation des fûts 56, selon la flèche F56 sur la figure 8, tendant à extraire les galets 58 portés par les leviers 57 hors des logements 22 et 24, selon la flèche F58 sur cette même figure 8.

Au terme de ce mouvement de translation, les galets 58 sont désormais placés en regard des patins 97 appartenant au plancher pivotant 9, comme le montre notamment la figure 16. On fait alors pivoter l'arbre principal 5, de manière analogue à ce qui a été décrit ci-dessus, afin d'abaisser chaque galet 58. Étant donné que le crochet 17 a été déverrouillé, le plancher pivotant 9 a tendance à descendre sous l'effet de la gravité, en étant retenu uniquement par les galets 58. La force de retenue, exercée par chaque galet 58 sur un patin respectif 97, est matérialisée par la flèche F97 sur la figure 17. Il se produit par conséquent une rotation, par rapport à l'ossature 1, du plancher pivotant 9 selon la flèche F9 sur la figure 21.

On fait pivoter ce plancher pivotant 9, jusqu'à ce qu'il se trouve au contact de l'extrémité supérieure du système coulissant. Au terme de ce pivotement, comme le montrent les figures 21 et 27, les lames 8D à 8H du système coulissant se trouvent dans le prolongement du bord libre 90' de la surface de cheminement 90. Dans cette configuration, la figure 19 montre la formation d'une rampe d'accès appartenant à l'ensemble de marchepied selon l'invention, laquelle est désignée dans son ensemble par la référence 99. Cette rampe 99 est formée successivement par la surface de cheminement 90, les lames 8D à 8H ainsi que les profils 81 qui les séparent deux à deux, et enfin par le longeron 72.

Enfin on ouvre la porte 106, de manière à permettre le cheminement des passagers le long de la rampe 99 ci-dessus. On notera que, selon une caractéristique tout particulièrement avantageuse de l'invention, il existe seulement un très faible décalage vertical entre le bord libre ci-dessus et la face supérieure des lames. Ce décalage correspond sensiblement à l'épaisseur de la tôle mince 92, dont on a vu qu'elle est typiquement voisine de 6 mm.

Cette caractéristique permet d'assurer une excellente continuité de surfaces entre le plancher et le système coulissant, ce qui est avantageux notamment en termes de confort et de sécurité, notamment pour les usagers en fauteuil roulant. Par ailleurs, il est possible de conférer des propriétés mécaniques satisfaisantes au plancher 90, grâce à la présence du renfort 91. On notera que ce confort et cette sécurité sont en particulier permis, sans cependant transiger avec la solidité, grâce au fait que les lames du système coulissant basculent depuis la glissière inférieure 36 en direction de la glissière supérieure 78, lors de la mise en translation du système coulissant par rapport au dispositif intermédiaire.

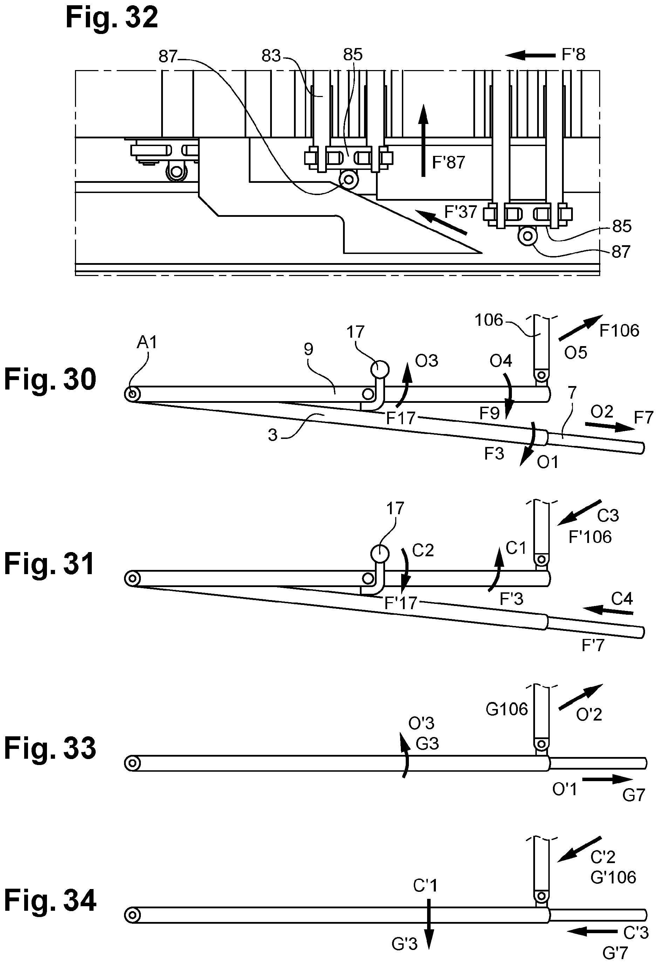

La figure 30 récapitule de façon schématique les différentes étapes, décrites ci-dessus, permettant le déploiement du système coulissant 7. On retrouve, successivement, le pivotement du dispositif intermédiaire vers le bas selon la flèche F3, le déplacement en translation du système coulissant 7 à l'opposé du dispositif intermédiaire selon la flèche F7, le déverrouillage du crochet 17 selon la flèche F17, le pivotement du plancher pivotant vers le bas selon la flèche F9, puis enfin l'ouverture de la porte selon la flèche F106. Sur cette figure, ces étapes successives sont affectées des références O1 à O5, la lettre « O » faisant référence à cette phase d'ouverture (« opening » en langue anglaise).

La figure 31 illustre, de façon analogue à ce qui est montré sur la figure 28, les étapes permettant le repliement du système coulissant 7, qui sont affectées des références C1 à C4. Sur cette figure, la lettre « C » fait référence à la phase de fermeture (« closing » en langue anglaise). On retrouve successivement le pivotement du dispositif intermédiaire vers le haut selon la flèche F'3, le verrouillage du crochet 17 selon la flèche F'17, la fermeture de la porte selon la flèche F'106, puis enfin l'escamotage du plancher pivotant par rapport au dispositif intermédiaire selon la flèche F'7.

On notera que, durant l'étape C1, le pivotement du dispositif intermédiaire 3 vers le haut s'accompagne d'un pivotement correspondant du plancher pivotant 9. En effet, lors de ce mouvement du dispositif intermédiaire 3 vers le haut, l'ergot 35 permet de solidariser le plancher pivotant par rapport à ce dispositif intermédiaire. Par ailleurs, lors de l'étape C4 correspondant à l'escamotage du plancher pivotant, le mouvement des lames et des chariots est inverse de celui décrit en référence à la figure 25. Ce mouvement inverse, illustrée sur la figure 32, fait intervenir un déplacement global des lames 8 selon la flèche F'8, ainsi qu'un glissement des chariots le long de la came 37, selon les flèches F'37, qui induit une translation de ces chariots vers l'intérieur des logements des lames selon les flèches F'87.

Selon une seconde possibilité de la mise en oeuvre de l'invention, on suppose désormais que la surface du quai 200 est située au-dessus de la surface supérieure du plancher mobile 90. Dans ce cas, comme précédemment, un capteur mesure les distances séparant le bord libre 7' du système coulissant, par rapport à l'extrémité en regard du quai. Le calculateur mentionné ci-dessus détermine alors, à partir de cette mesure, l'inclinaison voulue du système coulissant. Cette inclinaison garantit que, au terme de son mouvement de déploiement, ce système coulissant vienne soit en appui sur le quai, soit en regard du quai légèrement au-dessus de celui-ci.

La figure 33 illustre, de façon analogue à ce qui est montré sur la figure 30, les étapes permettant le déploiement du système coulissant 7 dans cette seconde possibilité de mise en oeuvre, ces étapes étant affectées des références O'1 à O'3. Sur cette figure 33, tout comme ci-dessus, la lettre « O » fait référence à la phase d'ouverture. On retrouve successivement le déplacement en translation du système coulissant 7 à l'opposé du dispositif intermédiaire selon la flèche G7, l'ouverture de la porte selon la flèche G106, puis enfin le pivotement vers le haut à la fois du dispositif intermédiaire et du plancher pivotant, selon la flèche G3. De la même manière que ce qui a été décrit ci-dessus, le pivotement du dispositif intermédiaire vers le haut entraîne celui du plancher pivotant, étant donné la présence de l'ergot 35.

La figure 34 illustre, de façon analogue à ce qui est montré sur la figure 31, les étapes permettant le repliement du système coulissant 7 dans cette seconde possibilité de mise en oeuvre, ces étapes étant affectées des références C'1 à C'3. Sur cette figure 34, tout comme ci-dessus, la lettre « C » fait référence à la phase de fermeture. On retrouve successivement le pivotement vers le bas à la fois du dispositif intermédiaire et du plancher pivotant, selon la flèche G'3, la fermeture de la porte selon la flèche G'106 puis enfin l'escamotage du plancher pivotant par rapport au dispositif intermédiaire selon la flèche G'7.

L'invention apporte de nombreux avantages, vis-à-vis de l'art antérieur mentionné en préambule de la présente description. En particulier, il est à souligner que la présence du dispositif intermédiaire 3 permet de s'affranchir des inconvénients, en termes de sécurité, liés à l'enseignement de EP 0 230 888 et DE U 2010 4221 présentés ci-dessus. En effet, grâce à l'invention, le mouvement du système coulissant peut être dissocié de celui du plancher de cheminement. Par conséquent il est possible de déplacer le système coulissant, à la fois en translation et en rotation, jusqu'à sa position finale contre le quai, tout en maintenant le plancher dans une position conférant une sécurité optimale aux passagers.

L'invention n'est pas limitée aux exemples décrits et représentés. Ainsi, en référence aux figures 30, 31, 33 et 34, on a représenté un système coulissant 7 dont le bord libre 7' se trouve en contact avec le quai 200. Dans ces conditions, ce quai forme alors un point d'appui en vue du pivotement à la fois du système coulissant 7, ainsi que du dispositif intermédiaire 3. À titre de variante non représentée, on peut prévoir que le système coulissant ne s'appuie au contraire pas sur le quai. Dans cette hypothèse, le pivotement entre ce système coulissant 7 et ce dispositif intermédiaire 3 est par exemple permis par l'emploi d'un blocage mécanique non représenté, actif ou non inactif. Ce dernier est typiquement exemple piloté de manière électrique, en étant placé entre l'ossature fixe et le dispositif intermédiaire.

En outre, dans l'exemple décrit et représenté, le système coulissant 7, comprenant entre autres des lames 8 mutuellement articulées, se trouve associé au dispositif intermédiaire 3. À titre de variante non illustrée, on peut prévoir que ces lames équipent un ensemble de marchepied d'un type différent de celui décrit et représenté ci-dessus. Dans cet esprit, un tel ensemble de marchepied peut en particulier être dépourvu d'un dispositif intermédiaire, tel que celui 3 qui a été décrit ci-dessus.

## Revendications

1. Ensemble de marchepied (I, l') pour véhicule de transport (100), notamment du type train, tramway, métro, bus ou encore trolleybus, cet ensemble comprenant
- une ossature (1) comportant des moyens de fixation (26, 28) sur la caisse (102) du véhicule de transport, cette ossature délimitant une ouverture latérale (20) ;
- un plancher pivotant (9), situé en service à proximité de la porte (106) du véhicule de transport, ce plancher pivotant étant destiné au cheminement des voyageurs, en particulier des personnes à mobilité réduite, ce plancher pivotant comprenant une surface (90) de cheminement et étant monté de manière pivotante par rapport à l'ossature autour d'un premier axe de pivotement (A1), prévu à l'opposé de ladite ouverture latérale (20) ;
- un dispositif intermédiaire (3), situé au-dessous de la surface de cheminement (90), ce dispositif intermédiaire étant monté de manière pivotante par rapport à l'ossature autour d'un second axe de pivotement (A1), qui est notamment confondu avec le premier axe de pivotement, le dispositif intermédiaire et le plancher pivotant (9) étant aptes à pivoter par rapport à l'ossature de manière mutuellement indépendante ;
- un système coulissant (7) mobile en translation par rapport au dispositif intermédiaire (3) entre une position repliée et une position dépliée, dans laquelle ce système coulissant forme, avec la surface de cheminement (90), une rampe (99) s'étendant au travers de ladite ouverture latérale (20)
cet ensemble étant **caractérisé en ce qu'**il comprend en outre des premiers moyens moteurs (4) et des premiers moyens de transmission (5, 56, 57, 58, 24) permettant le pivotement du dispositif intermédiaire, ainsi que des seconds moyens moteurs (4) et des seconds moyens de transmission (5, 56, 57, 58, 97) permettant le pivotement du plancher pivotant.

2. Ensemble selon la revendication précédente, dans lequel les premiers moyens moteurs et les seconds moyens moteurs sont formés par un unique ensemble moteur (4) apte à coopérer respectivement avec les premiers moyens de transmission et les seconds moyens de transmission.

3. Ensemble selon la revendication précédente, comprenant en outre des moyens de sélection qui présentent une première configuration fonctionnelle dans laquelle ils assurent le pivotement du dispositif intermédiaire (3), ainsi qu'une seconde configuration fonctionnelle dans laquelle ils assurent le pivotement du plancher pivotant (9), ces moyens de sélection comprenant notamment un levier (57) terminé par un galet (58), ce levier étant apte à être entraîné par un arbre de transmission (5), le galet étant apte à coopérer sélectivement soit avec un premier organe de transmission (22, 24), soit avec un second organe de transmission (97).

4. Ensemble selon la revendication précédente, dans lequel le premier organe de transmission comprend un logement (22, 24) solidaire de l'ossature, le galet (58) étant apte à rouler le long des parois de ce logement de manière à assurer le pivotement du dispositif intermédiaire, par l'intermédiaire de l'effet procuré par le levier, alors que le second organe de transmission comprend un organe d'appui (97) solidaire du plancher pivotant (9), cet organe d'appui étant apte à coopérer avec le galet (58).

5. Ensemble selon l'une des revendications 1 à 4, comprenant en outre des moyens (52, 75) d'entraînement du système coulissant (7) par rapport au dispositif intermédiaire (3), ces moyens d'entraînement étant notamment aptes à coopérer avec les premiers moyens moteurs ou les seconds moyens moteurs, ces moyens d'entraînement du système coulissant (7) comprenant en particulier au moins une chaîne (52) ou une courroie, apte à être entraînée par les premiers moyens moteurs ou les seconds moyens moteurs, ainsi qu'au moins un connecteur mécanique respectif (75), apte à solidariser la chaîne avec le système coulissant.

6. Ensemble selon l'une des revendications précédentes, comprenant en outre des moyens (17) de verrouillage du plancher pivotant (9) par rapport à l'ossature (1), qui sont mobiles entre une position active dans laquelle ils verrouillent le plancher pivotant par rapport à l'ossature, ainsi qu'une position inactive dans laquelle ils libèrent le plancher pivotant par rapport à l'ossature, de manière à permettre le pivotement de ce plancher pivotant sous l'effet des seconds moyens moteurs.

7. Ensemble selon l'une des revendications précédentes, comprenant en outre des moyens (35) de solidarisation du plancher pivotant (9) par rapport au dispositif intermédiaire (3), lesquels sont aptes à solidariser mutuellement ce plancher pivotant et ce dispositif intermédiaire, uniquement lors de leurs déplacements vers le haut.

8. Ensemble selon l'une des revendications précédentes, dans lequel le système coulissant (7) comprend une succession de lames (8) mobiles perpendiculairement à leur dimension principale, ces lames étant mutuellement parallèles et étant en outre parallèles en service à l'axe de roulage du véhicule.

9. Ensemble selon la revendication précédente, dans lequel le dispositif intermédiaire (3) comprend une première piste (36) de déplacement des lames, perpendiculairement à leur dimension principale, alors que le système coulissant (7) comprend une autre piste (78) de déplacement des lames, l'ensemble comprenant des moyens de basculement des lames entre ces pistes, les moyens de basculement comprenant notamment au moins un chariot (85) reliant deux lames adjacentes, chaque chariot étant propre à prendre appui contre la paroi latérale de chaque glissière, deux chariots (85) associés à chaque couple de lames adjacentes étant avantageusement prévus, chacun à une extrémité respective des lames, ces deux chariots étant mobiles l'un à l'opposé de l'autre, notamment sous l'effet de moyens élastiques (88).

10. Véhicule de transport (100), notamment du type train, tramway, métro, bus ou encore trolleybus, comprenant au moins un ensemble de marchepied (l, l') conforme à l'une quelconque des revendications précédentes.

11. Véhicule de transport selon la revendication précédente, la caisse (102) de ce véhicule de transport comprenant un plancher dit fixe (104), véhicule dans lequel la surface de cheminement (90) du plancher pivotant (9) est située dans le même plan que le plancher fixe, dans une position dite de repos du plancher pivotant, alors que le plancher fixe et la surface de cheminement définissent une continuité de surfaces dans le sens transversal du véhicule, c'est-à-dire sans ressaut significatif, dans une position inclinée de ce plancher pivotant par rapport au plancher fixe, véhicule dans lequel en outre chaque ensemble de marchepied s'étend avantageusement sur une partie seulement de la largeur de la caisse, en particulier sensiblement sur la moitié de cette largeur, ce véhicule comprenant en particulier deux ensembles de marchepied (l, l') disposés de part et d'autre de la direction transversale de la caisse, les axes de pivotement (A1, A1') de ces ensembles s'étendant à proximité immédiate de l'autre.

12. Procédé de mise en oeuvre d'un véhicule de transport (100) selon l'une des revendications 10 ou 11, dans lequel le plancher fixe (104) de la caisse est situé au-dessus d'un quai (200) de débarquement des voyageurs, ce procédé comprenant les étapes suivantes, dans la séquence d'ouverture de la porte de ce véhicule :
- pivotement du dispositif intermédiaire (3) vers le bas, par rapport à l'ossature (flèche F3),
- déplacement en translation du système coulissant (7) à l'opposé du dispositif intermédiaire (flèche F7)
- pivotement du plancher pivotant (9) vers le bas (flèche F9),
- ouverture de la porte (106) (flèche F106).

13. Procédé selon la revendication précédente, comprenant en outre une étape de déverrouillage (flèche F17) d'un organe de verrouillage (17), entre le déplacement en translation du système coulissant et le pivotement du plancher pivotant vers le bas, ce procédé comprenant en outre avantageusement les étapes suivantes, dans la séquence de fermeture de la porte :
- pivotement du plancher pivotant (9) vers le haut
- fermeture de la porte
- escamotage du plancher pivotant par rapport au dispositif intermédiaire,
et en outre en particulier une étape de verrouillage de l'organe de verrouillage entre le pivotement du plancher pivotant et la fermeture de la porte.

14. Procédé de mise en oeuvre d'un véhicule de transport selon l'une des revendications 10 ou 11, dans lequel le plancher fixe (104) de la caisse est situé au-dessous d'un quai (200) de débarquement des voyageurs, ce procédé comprenant les étapes suivantes, dans la séquence d'ouverture de la porte du véhicule :
- déplacement en translation du système coulissant (7) à l'opposé du dispositif intermédiaire
- ouverture de la porte (106),
- pivotement simultané vers le haut du dispositif intermédiaire (3) et du plancher pivotant (9),
ce procédé comprenant en outre avantageusement les étapes suivantes, dans la séquence de fermeture de la porte de véhicule :
- pivotement simultané vers le bas du dispositif intermédiaire et du plancher pivotant,
- fermeture de la porte,
- déplacement en translation du système coulissant (7) vers le dispositif intermédiaire.

## Patentansprüche

1. Trittstufenanordnung (l, l') für Transportfahrzeug (100), insbesondere vom Typ Zug, Tram, Metro, Bus oder auch Trolleybus, wobei diese Anordnung umfasst
- ein Gerüst (1), das Befestigungsmittel (26, 28) auf der Karosserie (102) des Transportfahrzeugs aufweist, wobei dieses Gerüst eine seitliche Öffnung (20) begrenzt;
- einen schwenkenden Boden (9), der sich im Einsatz in der Nähe der Tür (106) des Transportfahrzeugs befindet, wobei dieser schwenkende Boden zur Beförderung der Reisenden, vor allem der Personen mit eingeschränkter Mobilität, bestimmt ist, wobei dieser schwenkende Boden eine Beförderungsoberfläche (90) umfasst und im Verhältnis zum Gerüst um eine erste Schwenkachse (A1) schwenkend angebracht ist, die gegenüber der seitlichen Öffnung (20) vorgesehen ist;
- eine Übergangsvorrichtung (3), die sich unterhalb der Beförderungsoberfläche (90) befindet, wobei diese Übergangsvorrichtung im Verhältnis zum Gerüst um eine zweite Schwenkachse (A1) schwenkend angebracht ist, die insbesondere mit der ersten Schwenkachse zusammenfällt, wobei die Übergangsvorrichtung und der schwenkende Boden (9) imstande sind, im Verhältnis zum Gerüst gegenseitig unabhängig zu schwenken;
- ein im Verhältnis zur Übergangsvorrichtung (3) zwischen einer eingezogenen Position und einer ausgefahrenen Position translatorisch bewegliches gleitendes System (7), in der dieses gleitende System mit der Beförderungsoberfläche (90) eine Rampe (99) bildet, die sich durch die seitliche Öffnung (20) hindurch erstreckt, wobei diese Anordnung **dadurch gekennzeichnet ist, dass** sie ferner erste Motormittel (4) und erste Übertragungsmittel (5, 56, 57, 58, 24) umfasst, die das Schwenken der Übergangsvorrichtung erlauben, sowie zweite Motormittel (4) und zweite Übertragungsmittel (5, 56, 57, 58, 97), die das Schwenken des schwenkenden Bodens erlauben.

2. Anordnung nach vorangehendem Anspruch, wobei die ersten Motormittel und die zweiten Motormittel von einer einzigen Motoranordnung (4) gebildet sind, die imstande ist, jeweils mit den ersten Übertragungsmitteln und den zweiten Übertragungsmitteln zusammenzuwirken.

3. Anordnung nach vorangehendem Anspruch, umfassend ferner Auswahlmittel, die eine erste Funktionskonfiguration aufweisen, in der sie das Schwenken der Übergangsvorrichtung (3) sichern, sowie eine zweite Funktionskonfiguration, in der sie das Schwenken des schwenkenden Bodens (9) sichern, wobei diese Auswahlmittel insbesondere einen Hebel (57) umfassen, der mit einer Rolle (58) endet, wobei dieser Hebel imstande ist, von einer Transmissionswelle (5) angetrieben zu werden, wobei die Rolle imstande ist, selektiv entweder mit einem ersten Übertragungsorgan (22, 24) oder mit einem zweiten Übertragungsorgan (97) zusammenzuwirken.

4. Anordnung nach vorangehendem Anspruch, wobei das erste Übertragungsorgan eine Aufnahme (22, 24) umfasst, die mit dem Gerüst fest verbunden ist, wobei die Rolle (58) imstande ist, entlang der Wände dieser Aufnahme derart zu rollen, dass das Schwenken der Übergangsvorrichtung anhand der von dem Hebel hervorgerufenen Wirkung sichergestellt ist, wohingegen das zweite Übertragungsorgan ein Stützorgan (97) umfasst, das mit dem schwenkenden Boden (9) fest verbunden ist, wobei dieses Stützorgan imstande ist, mit der Rolle (58) zusammenzuwirken.

5. Anordnung nach einem der Ansprüche 1 bis 4, umfassend ferner Antriebsmittel (52, 75) des gleitenden Systems (7) im Verhältnis zur Übergangsvorrichtung (3), wobei diese Antriebsmittel insbesondere imstande sind, mit den ersten Motormitteln oder den zweiten Motormitteln zusammenzuwirken, wobei diese Antriebsmittel des gleitenden Systems (7) vor allem mindestens eine Kette (52) oder einen Riemen umfassen, die/der imstande ist, von den ersten Motormitteln oder den zweiten Motormitteln angetrieben zu werden, sowie mindestens einen jeweiligen mechanischen Verbinder (75), der imstande ist, die Kette mit dem gleitenden System fest zu verbinden.

6. Anordnung nach einem der vorangehenden Ansprüche, umfassend ferner Verriegelungsmittel (17) des schwenkenden Bodens (9) im Verhältnis zum Gerüst (1), die zwischen einer aktiven Position, in welcher sie den schwenkenden Boden im Verhältnis zum Gerüst verriegeln, sowie einer inaktiven Position, in welcher sie den schwenkenden Boden im Verhältnis zum Gerüst freigeben, derart beweglich sind, dass das Schwenken dieses schwenkenden Bodens unter der Wirkung der zweiten Motormittel erlaubt ist.

7. Anordnung nach einem der vorangehenden Ansprüche, umfassend ferner Verbindungsmittel (35) des schwenkenden Bodens (9) im Verhältnis zur Übergangsvorrichtung (3), die imstande sind, diesen schwenkenden Boden und diese Übergangsvorrichtung nur bei ihren Verlagerungen nach oben gegenseitig fest zu verbinden.

8. Anordnung nach einem der vorangehenden Ansprüche, wobei das gleitende System (7) eine Abfolge von Lamellen (8) umfasst, die senkrecht zu ihrer Haupterstreckung beweglich sind, wobei diese Lamellen gegenseitig parallel sind und ferner im Einsatz parallel zur Fahrtachse des Fahrzeugs sind.

9. Anordnung nach vorangehendem Anspruch, wobei die Übergangsvorrichtung (3) eine erste Verlagerungspiste (36) der Lamellen senkrecht zu ihrer Haupterstreckung umfasst, wohingegen das gleitende System (7) eine andere Verlagerungspiste (78) der Lamellen umfasst, wobei die Anordnung Kippmittel der Lamellen zwischen diesen Pisten umfasst, wobei die Kippmittel insbesondere mindestens einen Schlitten (85) umfassen, der zwei benachbarte Lamellen verbindet, wobei jeder Schlitten in der Lage ist, sich auf der Seitenwand jeder Gleitschiene abzustützen, wobei zwei Schlitten (85), die jedem Paar benachbarter Lamellen zugeordnet sind, in vorteilhafter Weise vorgesehen sind, jeder an einem jeweiligen Ende der Lamellen, wobei diese zwei Schlitten entgegengesetzt zueinander beweglich sind, insbesondere unter der Wirkung elastischer Mittel (88).

10. Transportfahrzeug (100), insbesondere vom Typ Zug, Tram, Metro, Bus oder auch Trolleybus, das mindestens eine Trittstufenanordnung (l, l') nach einem der vorangehenden Ansprüche umfasst.

11. Transportfahrzeug nach vorangehendem Anspruch, wobei die Karosserie (102) dieses Transportfahrzeugs einen als fest bezeichneten Boden (104) umfasst, wobei sich bei dem Fahrzeug die Beförderungsoberfläche (90) des schwenkenden Bodens (9) in einer als Ruheposition des schwenkenden Bodens bezeichneten Position in derselben Ebene wie der feste Boden befindet, wohingegen der feste Boden und die Beförderungsoberfläche eine Oberflächenkontinuität in der Querrichtung des Fahrzeugs, das heißt, ohne signifikanten Absatz, in einer geneigten Position dieses schwenkenden Bodens im Verhältnis zum festen Boden definieren, wobei sich bei dem Fahrzeug ferner jede Trittstufenanordnung in vorteilhafter Weise nur über einen Teil der Breite der Karosserie, vor allem etwa über die Hälfte dieser Breite, erstreckt, wobei dieses Fahrzeug vor allem zwei Trittstufenanordnungen (l, l') umfasst, die beiderseits der Querrichtung der Karosserie angeordnet sind, wobei sich die Schwenkachsen (A1, A1') dieser Anordnungen in unmittelbarer Nähe zueinander erstrecken.

12. Verfahren zur Umsetzung eines Transportfahrzeugs (100) nach einem der Ansprüche 10 oder 11, wobei sich der feste Boden (104) der Karosserie oberhalb einer Ausstiegskante (200) der Reisenden befindet, wobei dieses Verfahren bei der Öffnungssequenz der Tür dieses Fahrzeugs die folgenden Schritte umfasst:
- Schwenken der Übergangsvorrichtung (3) nach unten im Verhältnis zum Gerüst (Pfeil F3),
- translatorisches Verlagern des gleitenden Systems (7) entgegengesetzt zur Übergangsvorrichtung (Pfeil F7),
- Schwenken des schwenkenden Bodens (9) nach unten (Pfeil F9),
- Öffnen der Tür (106) (Pfeil F106).

13. Verfahren nach vorangehendem Anspruch, das ferner einen Schritt des Entriegelns (Pfeil F17) eines Verriegelungsorgans (17) zwischen der translatorischen Verlagerung des gleitenden Systems und dem Schwenken des schwenkenden Bodens nach unten umfasst, wobei dieses Verfahren ferner in vorteilhafter Weise bei der Schließsequenz der Tür die folgenden Schritte umfasst:
- Schwenken des schwenkenden Bodens (9) nach oben,
- Schließen der Tür,
- Einfahren des schwenkenden Bodens im Verhältnis zur Übergangsvorrichtung,
und ferner vor allem einen Schritt des Verriegelns des Verriegelungsorgans zwischen dem Schwenken des schwenkenden Bodens und dem Schließen der Tür.

14. Verfahren zur Umsetzung eines Transportfahrzeugs nach einem der Ansprüche 10 oder 11, wobei sich der feste Boden (104) der Karosserie unterhalb einer Ausstiegskante (200) der Reisenden befindet, wobei dieses Verfahren bei der Öffnungssequenz der Tür des Fahrzeugs die folgenden Schritte umfasst:
- translatorisches Verlagern des gleitenden Systems (7) entgegengesetzt zur Übergangsvorrichtung,
- Öffnen der Tür (106),
- gleichzeitiges Schwenken der Übergangsvorrichtung (3) und des schwenkenden Bodens (9) nach oben,
wobei dieses Verfahren ferner in vorteilhafter Weise in der Verschlusssequenz der Fahrzeugtür die folgenden Schritte umfasst:
- gleichzeitiges Schwenken der Übergangsvorrichtung und des schwenkenden Bodens nach unten,
- Schließen der Tür,
- translatorisches Verlagern des gleitenden Systems (7) in Richtung der Übergangsvorrichtung.

## Claims

1. A step assembly (I, I') for a transport vehicle (100), in particular of the train, tram, underground train, bus or trolleybus type, this assembly comprising
- a framework (1) including fastening means (26, 28) on the frame (102) of the transport vehicle, this framework delimiting a side opening (20);
- a pivoting floor (9), located in use in proximity to the door (106) of the transport vehicle, this pivoting floor being intended for the progress of passengers, in particular mobility-impaired people, this pivoting floor comprising a progress surface (90) and being pivotably mounted relative to the framework about a first pivot axis (A1), provided opposite to said side opening (20);
- an intermediate device (3), located below the progress surface (90), this intermediate device being pivotably mounted relative to the framework about a second pivot axis (A1), which is in particular the same as the first pivot axis, the intermediate device and the pivoting floor (9) being capable of pivoting relative to the framework mutually independently;
- a sliding system (7) translationally movable relative to the intermediate device (3) between a folded position and an unfolded position, in which this sliding system forms, together with the progress surface (90), a ramp (99) extending through said side opening (20)
this assembly being **characterised in that** it further comprises first motive means (4) and first transmission means (5, 56, 57, 58, 24) for pivoting the intermediate device, as well as second motive means (4) and second transmission means (5, 56, 57, 58, 97) for pivoting the pivoting floor.

2. The assembly according to the preceding claim, wherein the first motive means and the second motive means are formed by a single motive assembly (4) capable of cooperating with the first transmission means and the second transmission means respectively.

3. The assembly according to the preceding claim, further comprising selection means which have a first functional configuration in which they ensure pivoting of the intermediate device (3), as well as a second functional configuration in which they ensure pivoting of the pivoting floor (9), these selection means in particular comprising a lever (57) which ends with a roller (58), this lever being capable of being driven by a transmission shaft (5), the roller being capable of selectively cooperating either with a first transmission member (22, 24), or with a second transmission member (97).

4. The assembly according to the preceding claim, wherein the first transmission member comprises a housing (22, 24) integral with the framework, the roller (58) being capable of rolling along the walls of this housing so as to ensure pivoting of the intermediate device, through the effect provided by the lever, whereas the second transmission member comprises a bearing member (97) integral with the pivoting floor (9), this bearing member being capable of cooperating with the roller (58).

5. The assembly according to one of claims 1 to 4, further comprising means (52, 75) for driving the sliding system (7) relative to the intermediate device (3), these driving means being in particular capable of cooperating with the first motive means or the second motive means, these means for driving the sliding system (7) comprising in particular at least one chain (52) or a belt, capable of being driven by the first motive means or the second motive means, as well as at least one respective mechanical connector (75), capable of securing the chain with the sliding system.

6. The assembly according to one of the preceding claims, further comprising means (17) for locking the pivoting floor (9) relative to the framework (1), which are movable between an active position in which they lock the pivoting floor relative to the framework, as well as an inactive position in which they release the pivoting floor relative to the framework, so as to enable pivoting of this pivoting floor under the effect of the second motive means.

7. The assembly according to one of the preceding claims, further comprising means (35) for securing the pivoting floor (9) relative to the intermediate device (3), which means are capable of mutually securing this pivoting floor and this intermediate device, only when they move upwardly.

8. The assembly according to one of the preceding claims, wherein the sliding system (7) comprises a succession of blades (8) movable perpendicularly to their main direction, these blades being mutually parallel and further being parallel in use to the rolling axis of the vehicle.

9. The assembly according the preceding claim, wherein the intermediate device (3) comprises a first track (36) for moving the blades, perpendicularly to their main dimension, whereas the sliding system (7) comprises another track (78) for moving the blades, the assembly comprises means for switching the blades between these tracks, the switching means in particular comprising at least one carriage (85) connecting two adjacent blades, each carriage being able to bear against the side wall of each guide rail, two carriages (85) associated with each pair of adjacent blades being advantageously provided, each at a respective end of the blades, these two carriages being movable one opposite to the other, in particular under the effect of elastic means (88).

10. A transport vehicle (100), in particular of the train, tram, underground train, bus or trolleybus type, comprising at least one step assembly (I, I') in accordance with any of the preceding claims.

11. The transport vehicle according to the preceding claim, the frame (102) of this transport vehicle comprising a so-called fixed floor (104), in which vehicle the progress surface (90) of the pivoting floor (9) is located in the same plane as the fixed floor, in a so-called rest position of the pivoting floor, whereas the fixed floor and the progress surface define a continuity of surfaces in the transverse sense of the vehicle, that is without a significant jump, in a tilted position of this pivoting floor relative to the fixed floor, furthermore in which vehicle each step assembly advantageously extends over only a part of the width of the frame, in particular substantially over half this width, this vehicle comprising in particular two step assemblies (I, I') disposed on either side of the transverse direction of the frame, the pivot axes (A1, A1') of these assemblies extending in close proximity to each other.

12. A method for implementing a transport vehicle (100) according to one of claims 10 or 11, wherein the fixed floor (104) of the frame is located above a platform (200) for disembarking passengers, this method comprising the following steps, in the sequence of opening the door of this vehicle:
- pivoting the intermediate device (3) downwardly, relative to the framework (arrow F3),
- translationally moving the sliding system (7) opposite to the intermediate device (arrow F7)
- pivoting the pivoting floor (9) downwardly (arrow F9),
- opening the door (106) (arrow F106).

13. The method according to the preceding claim, further comprising a step of unlocking (arrow F17) a locking member (17), between translationally moving the sliding system and pivoting the pivoting floor downwardly, this method further advantageously comprising the following steps, in the sequence of closing the door:
- pivoting the pivoting floor (9) upwardly
- closing the door
- retracting the pivoting floor relative to the intermediate device,
and furthermore in particular a step of locking the locking member between pivoting the pivoting floor and closing the door.

14. A method for implementing a transport vehicle according to one of claims 10 or 11, wherein the fixed floor (104) of the frame is located below a platform (200) for disembarking passengers, this method comprising the following steps, in the sequence of opening the door of the vehicle:
- translationally moving the sliding system (7) opposite to the intermediate device
- opening the door (106),
- simultaneously pivoting the intermediate device (3) and the pivoting floor (9) upwardly,
this method further advantageously comprising the following steps, in the sequence of closing the vehicle door:
- simultaneously pivoting the intermediate device and the pivoting floor downwardly,
- closing the door,
- translationally moving the sliding system (7) towards the intermediate device.
